# EUROPEAN PATENT APPLICATION

(11) **EP 3 075 516 A1**
(43) Date of publication of application: **05.10.2016**
(21) Application number: 14865344.7
(22) Date of filing: 25.11.2014
(51) Int. Cl.: B29C 45/18, B29C 45/63

(54) **METHOD FOR REMOVING UNDESIRABLE GAS IN INJECTION MOLDING MACHINE AND INJECTION MOLDING MACHINE**

(30) Priority: 28.11.2013 JP 2013245867; 03.09.2014 JP 2014179380; 16.10.2014 JP 2014211919
(71) Applicant: Toyo Machinery & Metal Co. Ltd., Akashi-shi, Hyogo 674-0091 (JP)
(72) Inventor: SHIOMI, Kouichi, Akashi-shi Hyogo 674-0091 (JP); INOUE, Akira, Akashi-shi Hyogo 674-0091 (JP); KATO, Junji, Akashi-shi Hyogo 674-0091 (JP)
(74) Representative: Schön, Christoph
(86) International application number: PCT/JP2014/081028
(87) International publication number: WO 2015/080072

(57) **Abstract**

Defective ratio of produced molding parts is reduced by reducing an undesirable gas fed to a cavity of a mold.

The injection molding machine comprises a heating cylinder (3) for melting resin material, a resin material feeding apparatus (6) for feeding the resin material to the heating cylinder (3) . The resin material feeding apparatus (6) comprises a pump (12) for generating suction force by drive, a injecting hopper (9) to which the resin material is injected by using suction power generated by driving the pump (12), an openable and closable sealing valve (10) mounted at a lower part of the injecting hopper (9), and a feeding hopper (10) to which the resin material injected to the injecting hopper (9) through the sealing valve (10) is fed. The resin material is fed to the heating cylinder (3) in a state of vacuum of the feeding hopper (11) and the heating cylinder (3) communicated with the feeding hopper (11) by driving the vacuum pump (20).

## Description

### Field of the Invention

The present invention relates to an injection molding machine and a method for removing undesirable gas in the same in which resin material to be raw material for molded parts is fed to a cavity of a mold through a heating cylinder.

Conventionally, in a common injection molding machine, molded parts are formed by supplying grain-like thermoplastic resin (pellets) as raw material to a heating cylinder, discharging the resin while melting toward a nozzle side at a leading end of a screw by a forward-rearward movable screw disposed in the heating cylinder, injecting the molten resin from an injection nozzle disposed at the leading end of the screw into a cavity of a mold apparatus, after cooling and solidifying the molten resin in the cavity, opening the mold, and removing molded products sticking on the mold therefrom using an ejector pin.

In such injection molding machine forming the molded parts to be made of plastic, when the thermoplastic resin injected into a hopper is heated and molten in the heating cylinder, steam, volatile gas and so on included in the thermoplastic resin are generated as undesirable gas thereby. When the undesirable gas enters the cavity together with the thermoplastic resins, resin burning may occur on the molded products and defective products will be produced.

JP-A-2003-103522 (Patent Document 1) and JP-B-4142995 (Patent Document 2) disclose the above-identified technology. In the Patent Document 1, there is described a melting molding machine 1 such as an injection molding machine and an extrusion molding machine. A tube-shaped feeding tubular port 15 is disposed at a lower part of the leading end portion of a feeding hopper 10 for feeding the resin into a cylinder 4. A connecting tube 11 is closely connected to a lower part of the feeding hopper 10. The lower end portion of the connecting tube 11 is closely connected to an inner surface of an inlet 7 of the cylinder 4. The connecting tube 11 has a double-cylinder structure for covering an outer periphery of the feeding tubular port 15 with a predetermined interval. There is described that, due to such structure, the resin is stably fed from the feeding tubular port 15 and an undesirable gas is removed between the connecting tube 11 and the feeding tube port 15.

The Patent Document 2 discloses a feeding apparatus of resin raw material for a synthetic resin molding machine for removing gas generated in a casing of a heating cylinder during a metering process by using rinsing effect of atmosphere and so on. The feeding apparatus of resin raw material for the synthetic resin molding machine comprises, for achieving the above-mentioned object, a raw material inlet of the heating cylinder having a screw and a casing, a raw material providing inner tubular portion which is connected to the raw material inlet and injects the raw material into the heating cylinder, a damper disposed at the upper raw material injecting inner tubular portion, an atmosphere inlet formed between the raw material injecting inner tubular portion and the damper, and communicated with the raw material injecting inner tubular portion, an atmosphere release valve connected to the atmosphere inlet, an exhaust outer tubular portion disposed for surrounding the raw material injecting inner tubular portion and provided with a gas suction port, and the lower end opening portion thereof is communicated with the above raw material inlet, and a control means for controlling opening of the atmosphere release valve upon receipt of a predetermined control signal. As having such structure, the description is made that the undesirable gas generated in the casing can be removed by the rinsing effect.

### Patent Literature:

[Patent Document 1] JP-A-2003-103522
[Patent Document 2] JP-B-4142995

### Summary of the invention

The object of the conventional technology disclosed in the Patent Document 1 and the Patent Document 2 is to remove an undesirable gas generated at timing that a resin material is heated and molten in a heating cylinder. If, however, the undesirable gas is not completely removed, a part of the undesirable gas enters a cavity of a mold together with the resin material, and defective ratio of produced molded parts is increased. Therefore, there has been desired a technology for reducing as much as possible an amount of the undesirable gas entering the cavity of the mold together with the resin material, and also reducing the defective ratio of produced molded parts.

This invention has been made in view of the above-mentioned problems, and an object of this invention is to provide an injection molding machine and a method for removing an undesirable gas in the same, which is capable of reducing defective ratio of produced molded parts by suppressing the undesirable gas entering the cavity of the mold with the resin material.

According to the present invention, there is provided a method for removing an undesirable gas in an injection molding machine, the injection molding machine comprising:
a heating cylinder for melting a resin material, a resin material feeding apparatus for feeding the resin material to the heating cylinder, an injection nozzle mounted on a leading end of the heating cylinder and for injecting the resin material molten by the heating cylinder to a cavity of a mold, and a screw mounted in the heating cylinder and for sending the molten resin material to the injection nozzle; wherein
the resin material feeding apparatus comprises a pump for generating suction force by drive, an injecting hopper to which the resin material is injected by using suction power generated by driving the pump, an openable and closable sealing valve mounted at a lower part of the injecting hopper, a feeding hopper to which the resin material injected to the injecting hopper through the sealing valve is fed, a proximity switch for detecting whether a predetermined amount of the resin material fed to the feeding hopper exists or not, and a vacuum pump for evacuating an inside of the feeding hopper,
in order from top to bottom, there are disposed the injecting hopper, the open-close valve, the feeding hopper and the heating cylinder, and
   the resin material is fed to the heating cylinder in a vacuum state of the feeding hopper and the heating cylinder communicated with the feeding hopper by driving the vacuum pump and it is suppressed to feed a undesirable gas into the heating cylinder.

According to the present invention, there is provided a method for removing an undesirable gas in an injection molding machine, wherein a glass tube is disposed at a lower part of the feeding hopper, and the glass tube is provided with the proximity switch.

According to the present invention, there is provided a method for removing an undesirable gas in an injection molding machine, wherein a material dropping opening is disposed at a lower part of the glass tube, an inclined notch is formed at a rear part of the material dropping opening, and the resin material fed to the heating cylinder from the material dropping opening through the feeding hopper and the glass tube is smoothly fed.

According to the present invention, there is provided an injection molding machine comprising:
a heating cylinder for melting a resin material, a resin material feeding apparatus for feeding the resin material to the heating cylinder, an injection nozzle mounted at a leading end of the heating cylinder and for injecting the resin material molten by the heating cylinder into a cavity of a mold, a screw mounted in the heating cylinder and for sending the molten resin material to the injection nozzle; wherein
the resin material feeding apparatus comprises a pump for generating suction force by drive, a injecting hopper to which the resin material is injected by using suction power generated by driving the pump, an openable and closable sealing valve mounted at a lower part of the injecting hopper, a feeding hopper to which the resin material injected to the injecting hopper through the sealing valve is fed, a proximity switch for detecting whether a predetermined amount of the resin material fed to the feeding hopper exists or not, and a vacuum pump for evacuating the feeding hopper and the heating cylinder communicated with the feeding hopper by drive when there is detected a predetermined amount of the resin material fed to the feeding hopper by the proximity switch, a material dropping tube for feeding the resin material fed to the feeding hopper to the heating cylinder provided with the screw when the feeding hopper and the heating cylinder communicated with the feeding hopper are in a state of vacuum by driving the vacuum pump, a tubular sleeve for covering an outer periphery of the material dropping tube with an interval, and an exhaust port connected to the vacuum pump and for discharging an undesirable gas generated by melting the resin material in the heating cylinder to the outside through an exhaust path located between the tubular sleeve and the material dropping tube, and
a gap dimension between a lower end portion of the material dropping tube and an upper end portion of the screw is determined as not less than 1mm and not more than 3mm.

According to the present invention, there is provided an injection molding machine, wherein the gap dimension between the lower end portion of the material dropping tube and the upper end portion of the screw is smaller than the smallest dimension among a length, height and width of the resin material fed into the heating cylinder.

According to the present invention, there is provided an injection molding machine comprising:
a heating cylinder for melting resin material, a resin material feeding apparatus for feeding the resin material to the heating cylinder, an injection nozzle mounted at a leading end of the heating cylinder and for injecting the resin material molten by the heating cylinder into a cavity of a mold, a screw mounted in the heating cylinder and for sending the molten resin material to the injection nozzle; wherein
the resin material feeding apparatus comprises a pump for generating suction force by drive, an injecting hopper to which the resin material is injected by using suction power generated by driving the pump, an openable and closable sealing valve mounted at a lower part of the injecting hopper, a feeding hopper to which the resin material injected to the injecting hopper through the sealing valve is fed, a proximity switch for detecting whether a predetermined amount of the resin material fed to the feeding hopper exists or not, and a vacuum pump for evacuating the feeding hopper and the heating cylinder communicated with the feeding hopper by drive when there is detected a predetermined amount of the resin material fed to the feeding hopper by the proximity switch, a material dropping tube for feeding the resin material fed to the feeding hopper to the heating cylinder provided with the screw when the feeding hopper and the heating cylinder communicated with the feeding hopper is in a state of vacuum by driving the vacuum pump, a tubular sleeve for covering an outer periphery of the material dropping tube with an interval, and exhaust port connected to the vacuum pump and for discharging an undesirable gas generated by melting the resin material in the heating cylinder to the outside through an exhaust path located between the tubular sleeve and the material dropping tube,
a lower end portion of the material dropping tube is formed as an inverted U-shaped, and
a gap dimension between the lower end portion of the inverted U-shaped material dropping tube and the upper end portion of the screw is determined as not less than 1mm and not more than 3mm.

According to the present invention, there is provided an injection molding machine, wherein the gap dimension between the lower end portion of the inverted U-shaped material dropping tube and the screw is smaller than the smallest dimension among a length, height and width of the resin material fed into the heating cylinder.

According to the present invention, there is provided an injection molding machine, wherein an inclined notch portion is formed at a rear lower part of the material dropping tube, and the resin material can be smoothly fed to the heating cylinder from the material dropping tube.

According to an invention related to a method for removing an undesirable gas in an injection molding machine, a resin material is fed from a feeding hopper to a heating cylinder in a state of vacuum in the feeding hopper and the heating cylinder communicated with the feeding hopper. It can be suppressed to feed the undesirable gas entering the heating cylinder together with the resin material when the resin material is fed from a resin material feeding apparatus to the heating cylinder. It can be avoided to generate defect such as resin burning on molded products, and the molded products having a high quality can be obtained. Furthermore, there can be suppressed undesirable gas entering a cavity of a mold together with the resin material, and defective rate of produced molded parts can be reduced.

According to the present invention of the injection molding machine, gap dimension between a lower end portion of a material dropping tube and an upper end portion of a screw is determined as not less than 1mm and not more than 3mm, and when the undesirable gas generated at melting the resin material in the heating cylinder is evacuated by a vacuum pump, it can be achieved to smoothly guide the undesirable gas into an exhaust path between a tubular sleeve and a material dropping tube, and to remove the same by smoothly discharging from an exhaust port to the outside through an exhaust path. Namely, the undesirable gas generated at melting the resin material in the heating cylinder can be effectively discharged to the outside. It can be avoided to mix bubble into produced molding parts, and defective ratio of the produced molding parts can be reduced. Furthermore, the gap dimension between a lower end portion of a material dropping tube and an upper end portion of a screw is smaller than the smallest dimension among a length, height and width of the resin material fed into the heating cylinder, and therefore it can be avoided that the resin material is carried to the exhaust path located between the material dropping tube and the tubular sleeve disposed at an outer periphery side of the material dropping tube. The undesirable gas flow passing through the exhaust path is not disturbed thereby. It becomes possible to discharge more smoothly the undesirable gas from the exhaust port to the outside, and it can be achieved to reduce defective ratio of the produced molding parts.

Additionally, according to the invention of the injection molding machine, the gap dimension between a lower end portion of an inverted U-shaped material dropping tube and the screw is determined as not less than 1mm and not more than 3mm. When the undesirable gas generated at melting the resin material in the heating cylinder is evacuated by the vacuum pump, there can be achieved to smoothly guide the undesirable gas into an exhaust path between the tubular sleeve and the material dropping tube, and to remove the same by smoothly discharging from the exhaust port to the outside through the exhaust path. Namely, the undesirable gas generated at melting the resin material in the heating cylinder can be effectively discharged to the outside. It can be avoided to mix bubble into produced molding parts, and the defective ratio of the produced molding parts can be reduced.

The gap dimension between a lower end portion of an inverted U-shaped material dropping tube and the screw is smaller than the smallest dimension among a length, height and width of the resin material fed into the heating cylinder, and therefore it can be suppressed that the resin material is carried to the exhaust path located between the material dropping tube and the tubular sleeve disposed at the outer periphery side of the material dropping tube, and the undesirable gas flow passing through the exhaust path is not disturbed thereby. It becomes possible to discharge more smoothly the undesirable gas from the exhaust port to the outside, and to further reduce the defective ratio of the produced molding parts.

Fig. 1 is a block diagram showing an injection unit equipped in an injection molding machine according to Embodiment 1.
Fig. 2 is a cross sectional view showing a main part of the injection unit equipped in the injection molding machine according to Embodiment 1.
Fig. 3 is a cross sectional view showing a main part of the injection unit equipped in the injection molding machine according to Embodiment 2.
Fig. 4 is a block diagram showing the injection unit equipped in the injection molding machine according to Embodiment 3.
Fig. 5 is a cross sectional view showing a main part of the injection unit equipped in the injection molding machine according to Embodiment 3.
Fig. 6 is an explanatory view showing a dimension of a resin material fed into a heating cylinder according to Embodiments 3 and 5.
Fig. 7 is an example of graph of experimental results showing relationship between gap dimension between a lower end portion of a material dropping tube and an upper end portion of a screw, and defective ratio of the produced molding parts.
Fig. 8 is a cross sectional view showing a main part of the injection unit equipped in the injection molding machine according to Embodiment 4.
Fig. 9 is a block diagram showing the injection unit equipped in the injection molding machine according to Embodiment 5.
Fig. 10 is a cross sectional view showing a main part of the injection unit equipped in the injection molding machine according to Embodiment 5.
Fig. 11 is an explanatory view showing positional relationship between gap dimension between a lower end portion of an inverted U-shaped material dropping tube and the screw according to Embodiment 5.
Fig. 12 is a perspective view showing the material dropping tube and the heating cylinder according to Embodiment 5.
Fig. 13 is a cross sectional view showing the material dropping tube and the heating cylinder according to Embodiment 5.
Fig. 14A is a photograph showing a condition of the resin material injected from an injection nozzle when PMMA resin is adopted as resin material according to Embodiment 5.
Fig. 14B is a photograph showing a condition of the resin material injected from the injection nozzle when PMMA resin is adopted as resin material in a known conventional example.
Fig. 15 is a cross sectional view showing a main part of the injection unit equipped in the injection molding machine according to Embodiment 6.

### DETAILED DESCRIPTION OF THE PREFERRED EMBODIMENTS

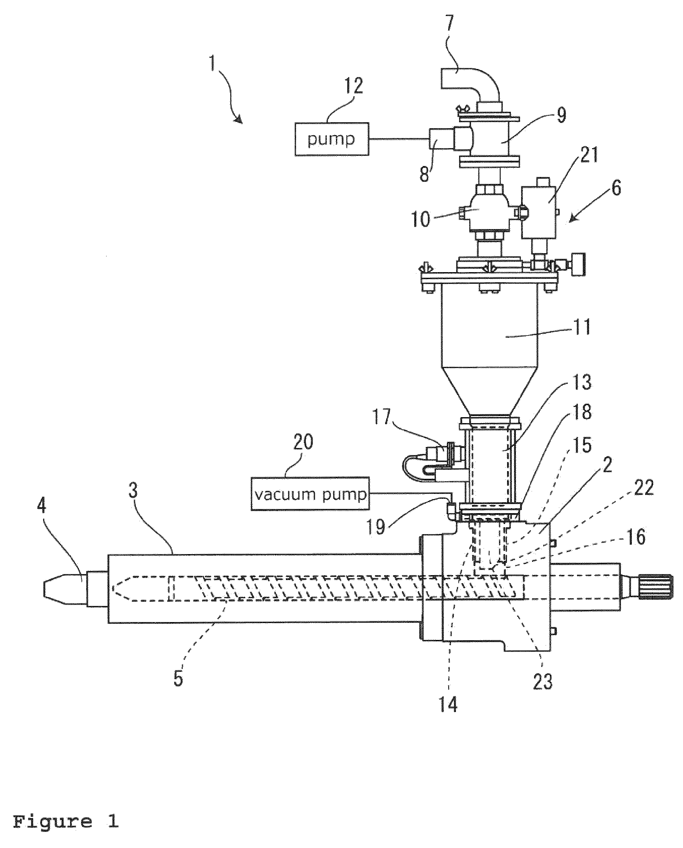

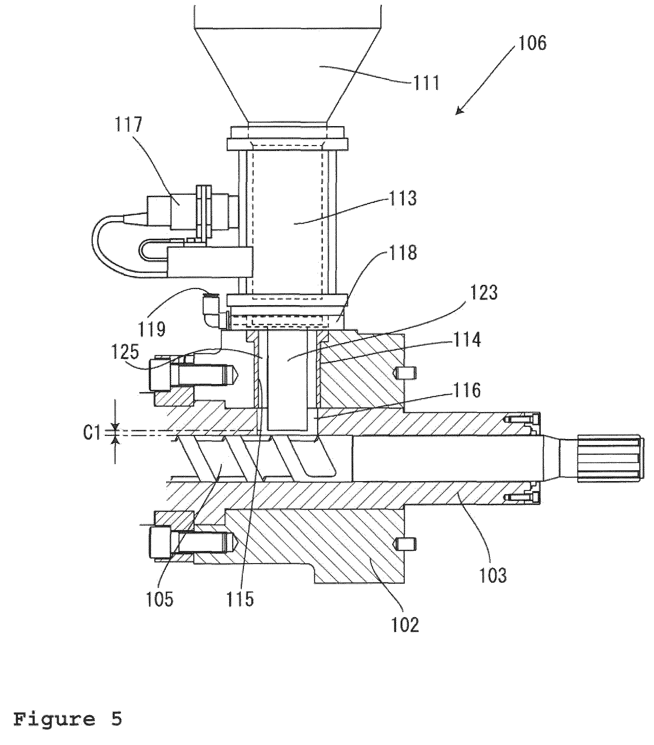

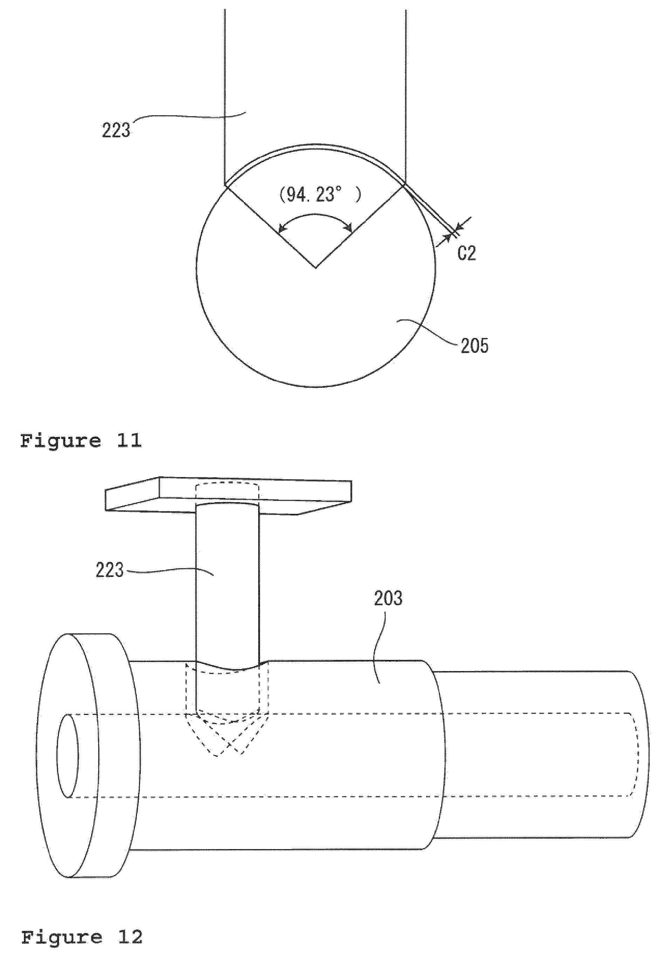

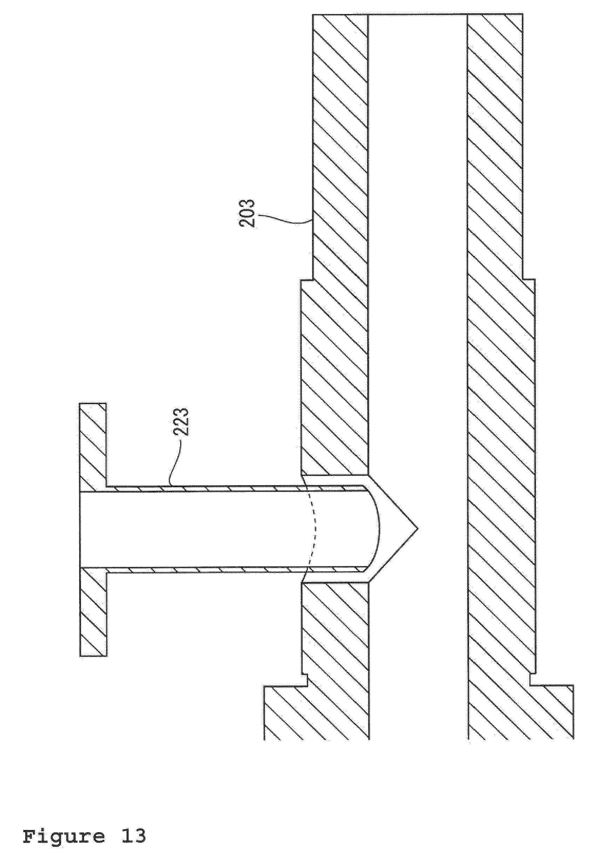

Now, the preferred embodiments of the present invention will be described with reference to Figs. 1 to Fig. 15. The present invention is easily applicable to a structure other than those described in the present embodiments within a scope of this invention.

### Embodiment 1

An injection unit 1 equipped in an injection molding machine according to Embodiment 1 shown in Fig. 1 comprises a tubular heating cylinder 3 fixed on a hopper block 2, an injection nozzle 4 mounted on a leading end of the heating cylinder 3, a screw 5 rotatably disposed in the inside of the heating cylinder 3, and a resin material feeding apparatus 6 for feeding the resin material such as thermoplastic resin to be a raw material of produced molding parts to the heating cylinder 3.

In the resin material feeding apparatus 6, in order from top to bottom, there are disposed a piping 7 for carrying the resin material, an injecting hopper 9 provided with an air suction port 8 at side, an openable and closable sealing valve 10, a feeding hopper 11, a glass tube 13, and a material dropping opening 23. The air suction port 8 of the injecting hopper 9 is connected with a pump 12.

The tubular glass tube 13 provided at a lower part of the feeding hopper 11 is disposed in such a manner as to face a cylindrical sleeve 15 engaged with a periphery portion of a hole 14 formed on the hopper block 2. The material dropping opening 23 disposed at a lower part of the glass tube 13 is inserted into a hole portion 16 formed on an upper part of the heating cylinder 3. The resin material injected from the piping 7 to the injecting hopper 9 is fed from the injecting hopper 9 to the heating cylinder 3 through the openable and closable sealing valve 10, the feeding hopper 11, the glass tube 13, and the material dropping opening 23. The glass tube 13 of a lower part of the feeding hopper 11 is made of glass for avoiding unfavorable influence of static electricity.

The side of the glass tube 13 is provided with a proximity switch 17 as a sensor. The proximity switch 17 detects whether the predetermined amount of resin material exists in the glass tube 13. Accordingly, it can be detected whether the predetermined amount of resin material exists in the feeding hopper 11.

An upper part of the hopper block 2 is provided with a flange portion 18 holding the glass tube 13 integrally provided with the feeding hopper 11. A suction port 19 communicated with the glass tube 13 is formed on the flange portion 18. By driving a vacuum pump 20 connected to the suction port 19 in a state of the sealing valve 10 closed, a vacuum state is made in the glass tube 13, the feeding hopper 11 communicated with the glass tube 13, and the material dropping opening 23. On the other hand, when the vacuum state is released, an atmosphere release valve 21 disposed at a side of the sealing valve 10 is opened and an air flows from the atmosphere release valve 21 into the feeding hopper 11, the glass tube 13 and the material dropping opening 23.

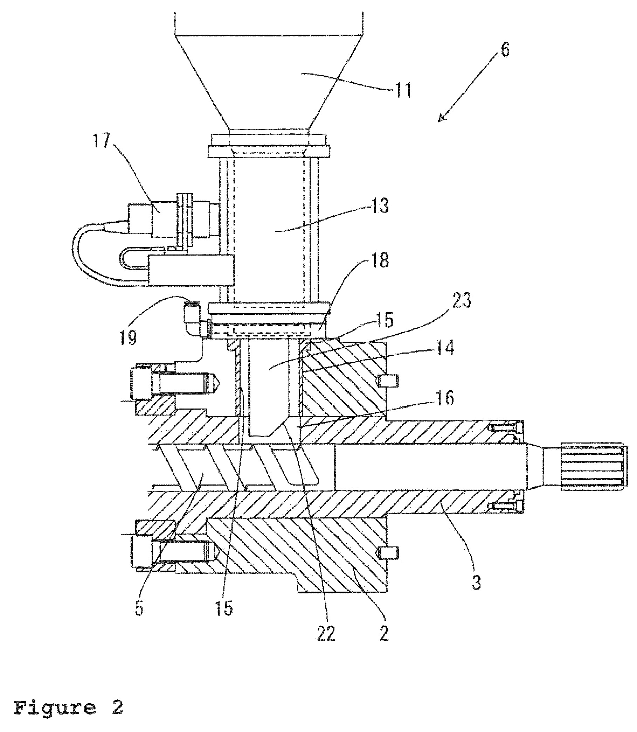

As shown in Fig. 2, an inclined notch portion 22 is formed at a rear part of the material dropping opening 23 disposed in a manner as to be inserted into a hole portion 16 of the heating cylinder 3. The notch portion 22 of the material dropping opening 23 is formed as inclined, and if a leading end portion of the screw 5 is defined as front side and an opposite side is defined as a rear side, the notch portion 22 is formed as inclined upward obliquely at a rear side from both sides located at an intermediate position of the front and rear side of the lower end of the material dropping opening 23. An angle of inclination of the notch portion 22 is described as 40 degree in the present Embodiment 1, however, it may be suitably determined within a range of 12.5° to 45°. The material dropping opening 23 is located near an upper part of the screw 5. The material dropping opening 23 is provided with a notch portion 22, and therefore the material dropping opening 23 has a wide area in the rear direction, and it can be capable of smoothly feeding the resin to the heating cylinder 3.

Next, a description will be made about an operation at feeding the resin material to the heating cylinder 3. When the vacuum pump 20 is driven in a state of the sealing valve 10 closed, and vacuum state is made in the feeding hopper 11, the glass tube 13 communicated with the feeding hopper 11, and the material dropping opening 23, if the proximity switch 17 detects a state that the resin material does not exist in the glass tube 13, the atmosphere release valve 21 is opened, and the sealing valve 10 is also opened, and an air flows from the atmosphere release valve 21 through the sealing valve 10 into the injecting hopper 9, the feeding hopper 11, the glass tube 13 communicated with the same and the material dropping opening 23.

When the pump 12 is driven, the air in the injecting hopper 9 is discharged from the air suction port 8 to the outside, and the resin material is carried from the outside to the heating cylinder 3 through the piping 7, the injecting hopper 9, the sealing valve 10, the feeding hopper 11, the glass tube 13 and the material dropping opening 23.

If the proximity switch 17 detects existence of the predetermined amount of resin material in the glass tube 13, the atmosphere release valve 21 and the sealing valve 10 are closed, and the vacuum pump 20 is driven and a vacuum state is made in the feeding hopper 11, the glass tube 13, the material dropping opening 23 and the heating cylinder 3 communicated therewith.

When the vacuum state is made in the feeding hopper 11, the glass tube 13, the material dropping opening 23 and the heating cylinder 3 communicated therewith, and the resin material in the material dropping opening 23 is fed into the heating cylinder 3 during heating, the resin material is carried to an injection nozzle 4 of the leading end portion of the screw 5 in accordance with rotation of the screw 5. After metering the predetermined amount of resin material, the injection nozzle 4 injects and fills molten resin material into a cavity of a clamped mold, and the molding parts are formed.

According to an injection molding machine of the above-mentioned Embodiment 1, the resin material is fed from the feeding hopper 11 to the heating cylinder 3 in the state that the feeding hopper 11 and the heating cylinder 3 communicated with the feeding hopper 11 become vacuum. When the resin material is fed from the resin material feeding apparatus 6 to the heating cylinder 3, it can be suppressed that undesirable gas enters the heating cylinder 3 together with the resin material. As a result, it can be avoided to generate defect such as resin burning on molded products, and the molded products having a high quality can be obtained. Furthermore, there can be suppressed undesirable gas entering a cavity of a mold together with the resin material, and defective rate of produced molded parts can be reduced.

### Embodiment 2

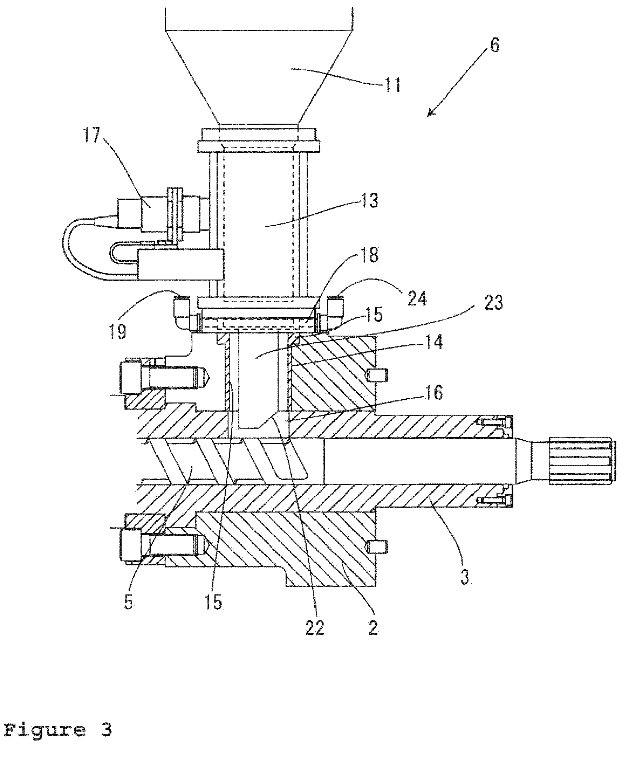

Fig. 3 shows a main part of the injection unit equipped in the injection molding machine according to Embodiment 2. The flange portion 18 according the Embodiment 2 is provided with a nitrogen inflow port 24 communicated with the glass tube 13, and other parts has same structure as the injection molding machine in Embodiment 1. Therefore the same reference numerals are used for the same parts as in Embodiment 1 and description will be omitted.

According to Embodiment 1, the vacuum state is made in the feeding hopper 11, the glass tube 13, the material dropping opening 23 and the heating cylinder 3 communicated with these parts by driving the vacuum pump 20. According to Embodiment 2, nitrogen is supplied in the feeding hopper 11, the glass tube 13, the material dropping opening 23 and the heating cylinder 3 communicated with these parts through a nitrogen inflow port 24 by driving the vacuum pump 20. Also in such a method, it can be suppressed that the undesirable gas is included in the resin material and the molded parts having a high quality can be obtained.

### Embodiment 3

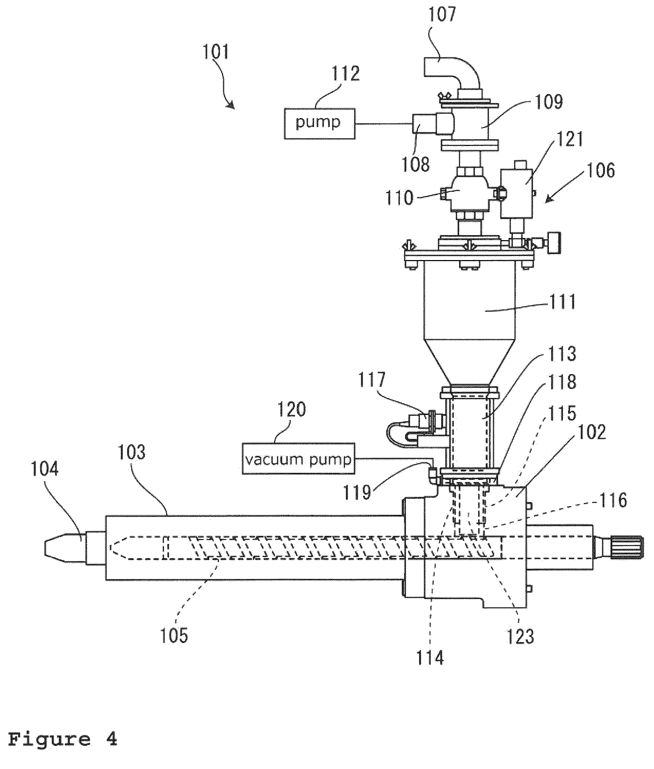

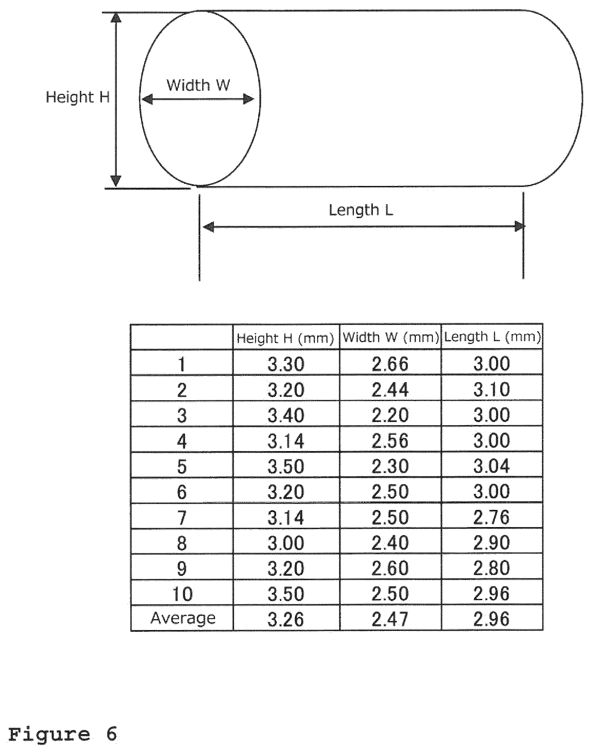

An injection unit 101 equipped in an injection molding machine according to Embodiment 3 shown in Fig. 4 comprises a tubular heating cylinder 103 fixed on a hopper block 102, an injection nozzle 104 mounted on a leading end of the heating cylinder 103, a screw 105 rotatably disposed in the inside of the heating cylinder 3, and a resin material feeding apparatus 106 for feeding the resin material such as thermoplastic resin to be a raw material of produced molding parts to the heating cylinder 103. According to Embodiment 3, an average dimension of the resin material fed from the resin material feeding apparatus 106 to the heating cylinder 103 is, as shown in Fig. 6, a length L is 2.96mm, a height H is 3.26mm and a width W is 2.47mm.

In the resin material feeding apparatus 106, in order from top to bottom, there are disposed a piping 107 for carrying the resin material, an injecting hopper 9 provided with an air suction port 108 at side, an openable and closable sealing valve 110, a feeding hopper 111, a glass tube 113, and a material dropping tube 123. The air suction port 108 of the injecting hopper 109 is connected with a pump 112.

The glass tube 113 provided at a lower part of the feeding hopper 111 is disposed in such a manner as to face a cylindrical sleeve 115 engaged with a periphery portion of a hole 114 formed on the hopper block 102. The material dropping tube 123 disposed at a lower part of the glass tube 13 is inserted into a hole portion 116 formed on an upper part of the heating cylinder 103. The resin material injected from the piping 107 to the injecting hopper 109 is fed from the injecting hopper 109 to the heating cylinder 103 through the openable and closable sealing valve 110, the feeding hopper 111, the glass tube 113, and the material dropping tube 123. The glass tube 113 of a lower part of the feeding hopper 111 is made of glass for avoiding unfavorable influence of static electricity.

The side of the glass tube 113 is provided with a proximity switch 117 as a sensor. The proximity switch 117 detects whether the predetermined amount of resin material exists in the glass tube 113. Accordingly, it can be detected whether the predetermined amount of resin material exists in the feeding hopper 111.

An upper part of the hopper block 102 is provided with a flange portion 118 holding the glass tube 113 integrally provided with the feeding hopper 111. A exhaust port 119 communicated with the glass tube 113 is formed on the flange portion 118. By driving a vacuum pump 120 connected to the exhaust port 119 in a state of the sealing valve 110 closed, a vacuum state is made in the glass tube 113, the feeding hopper 111 communicated with the glass tube 113, and the material dropping tube 123. On the other hand, when the vacuum state is released, an atmosphere release valve 121 disposed at a side of the sealing valve 110 is opened and an air flows from the atmosphere release valve 121 into the feeding hopper 111, the glass tube 113 and the material dropping tube 123.

The material dropping tube 123 disposed in a manner as to be inserted into a hole portion 116 of the heating cylinder 103 is provided directly above the screw 105. At an outer periphery of the material dropping tube 123, the tubular sleeve 115 is disposed with intervals having a double structure.

A slight gap is formed between a lower end portion of the material dropping tube 123 and an upper end portion of a screw 105. According to the present embodiments, the gap dimension C1 is determined not less than 1mm and not more than 3mm, more specifically 1mm. When the undesirable gas generated by melting the resin material in the heating cylinder 103 is discharged to the outside of the apparatus from the exhaust port 119 connected to the vacuum pump 120 through the exhaust path 125 located between the material dropping tube 123 and the tubular sleeve 115, the gap dimension C1 between the lower end portion of the material dropping tube 123 and the upper end portion of the screw 105 is smaller than the smallest dimension among a length L, height H and width W of the resin material fed into the heating cylinder 103. Therefore, it can be avoided that the resin material is carried to the exhaust path 125 located between the tubular sleeve 115 and the material dropping tube 123.

A description will be made about an operation for discharging the undesirable gas generated by feeding and melting the resin material in the heating cylinder 103. When the vacuum pump 120 is driven in a state of the sealing valve 110 closed, and vacuum state is made in the feeding hopper 111, the glass tube 113 communicated with the feeding hopper 111, and the material dropping tube 123, if the proximity switch 117 detects a state that the resin material does not exist in the glass tube 113, the atmosphere release valve 121 is opened, the sealing valve 110 is also opened, and an air flows from the atmosphere release valve 121 through the sealing valve 110 into the injecting hopper 109, the feeding hopper 111, the glass tube 113 communicated with the same and the material dropping tube 123.

When the pump 112 is driven, the air in the injecting hopper 109 is discharged from the air suction port 108 to the outside, and the resin material is carried from the outside to the heating cylinder 103 through the piping 107, the injecting hopper 109, the sealing valve 110, the feeding hopper 111, the glass tube 113 and the material dropping tube 123.

If the proximity switch 117 detects existence of the predetermined amount of resin material in the glass tube 113, the atmosphere release valve 121 and the sealing valve 110 are closed, and the vacuum pump 120 is driven and a vacuum state is made in the feeding hopper 111, the glass tube 113, the material dropping tube 123 and the heating cylinder 103 communicated therewith.

When the vacuum state is made in the feeding hopper 111, the glass tube 113, the material dropping tube 123 and the heating cylinder 103 communicated therewith, and the resin material in the material dropping tube 123 is fed into the heating cylinder 103 during heating by rotation of the screw 105, the resin material is carried to an injection nozzle 104 of the leading end portion of the screw 105 by rotation of the screw 105 and metering process is carried out. At the same time of the metering process, the undesirable gas generated by melting the resin material in the heating cylinder 103 is discharged from the exhaust port 119 to the outside through the exhaust path 125 by applying evacuation of the vacuum pump 120. After the metering process, the injection nozzle 104 injects and fills molten resin material into a cavity of a clamped mold, and the molding parts are formed.

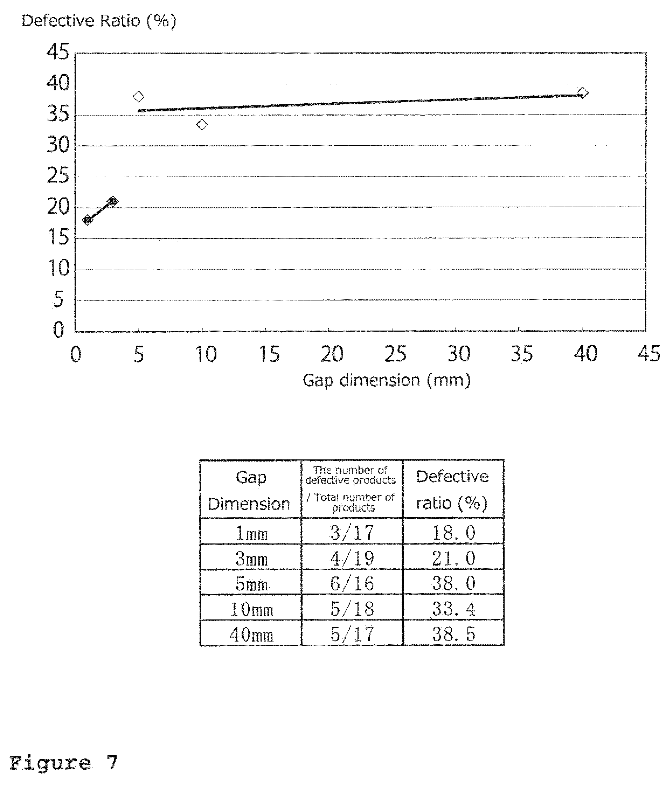

A description will be made about relationship between the gap dimension C1 between the lower end portion of the material dropping tube 123 and the upper end portion of the screw 105, and defective ratio of produced molding parts, based on a graph showing experimental result in Fig. 7.

The graph in Fig. 7 has a vertical axis as the defective ratio and a horizontal axis as the gap dimension. If bubble (so-called silver) is found visually in the produced molding parts, it is counted as the defective products and the defective ratio is shown as the experimental result. As apparent from the figure, if the gap dimension is equal to 1mm, total number of the products is 17 and the number of defective products is 3, and the defective ratio becomes 18%. If the gap dimension is equal to 3mm, the total number of the products is 19 and the number of defective products is 4, and the defective ratio becomes 21%. If the gap dimension is equal to 5mm, the total number of products is 16 and the number of the defective products is 6, and the defective ratio becomes 38%. If the gap dimension is equal to 10mm, the total number of the products is 18 and the number of the defective products is 5, and the defective ratio becomes 33.4%. If the gap dimension is equal to 40mm, the total number of products is 17 and the number of the defective products is 5, and the defective ratio becomes 38.5%. Taking these into consideration, if the gap dimension is not less than 1mm and not more than 3mm, the defective ratio is low, and if the gap dimension is more than 3mm, the defective ratio is greatly increased. As a result, if the gap dimension is not less than 1mm and not more than 3mm, and the defective ratio of the produced molding parts becomes low and the result is obtained that the defective gas is effectively removed.

According to the injection molding machine of Embodiment 3 as mentioned above, by setting the gap dimension between the lower end portion of the material dropping tube 123 and the upper end portion of the screw 105 as being not less than 1mm and not more than 3mm, in which the defective ratio of the produced molding parts is low, the defective gas generated at melting the resin material in the heating cylinder 103 is evacuated by a vacuum pump 120, and can be smoothly guided into the exhaust path located between the tubular sleeve 115 and the material dropping tube 123, and can be removed by smoothly discharging from an exhaust port 119 to the outside through the exhaust path 125. Namely, the undesirable gas generated at melting the resin material in the heating cylinder 103 can be effectively discharged to the outside. It can be avoided to mix bubble into produced molding parts, and it can be achieved to reduce defective ratio of the produced molding parts. Additionally, the gap dimension C1 between the lower end portion of the material dropping tube 123 and the upper end portion of the screw 105 is smaller than the smallest dimension among a length L, height H and width W of the resin material fed into the heating cylinder 103. Therefore, it can be avoided that the resin material is carried to the exhaust path 125 located between the material dropping tube 123 and the tubular sleeve 115 disposed at an outer periphery side of the material dropping tube 123 and. The undesirable gas flow passing through the exhaust path 125 is not disturbed thereby. It becomes possible to discharge more smoothly the undesirable gas from the exhaust port 119 to the outside, and it can be achieved to reduce the defective ratio of the produced molding parts.

### Embodiment 4

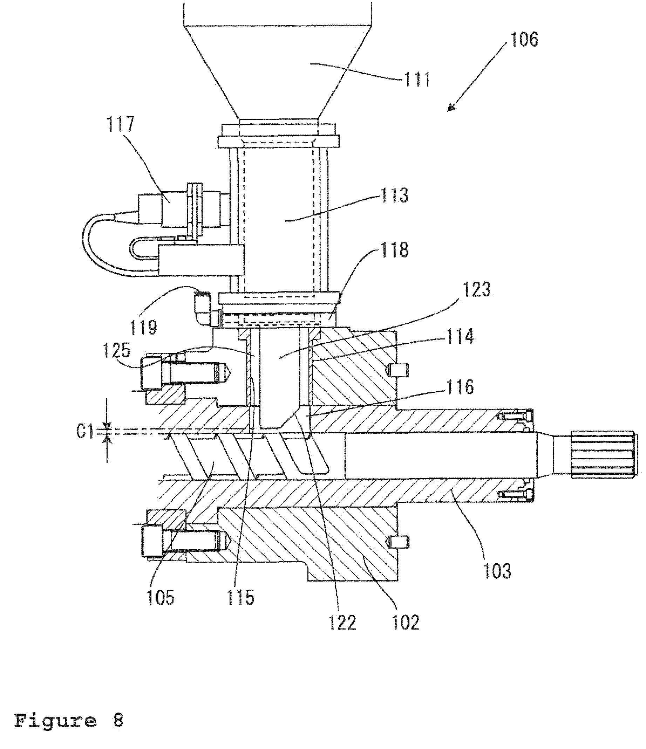

Fig. 8 shows a main part of the injection unit equipped in the injection molding machine according to Embodiment 4. Since Embodiment 4 has almost similar structure as that of the injection molding machine according to Embodiment 3, the same reference numerals are used for the same parts as in Embodiment 3, detailed description will be omitted, and mainly difference therebetween will be described.

In Embodiment 4, as shown in Fig. 8, an inclined notch portion 122 is formed at a rear part of the material dropping tube 123 disposed in a manner as to be inserted into a hole portion 116 of the heating cylinder 103. The notch portion 122 of the material dropping tube 123 is formed as inclined, and if the leading end portion of the screw 105 is defined as a front side and an opposite side is defined as a rear side, the notch portion 122 is formed as inclined upward obliquely at a rear side from both sides located at an intermediate position of the front and rear side of the lower end of the material dropping tube 123. An angle of inclination of the notch portion 122 is described as 40 degree in the present Embodiment 4, however, it may be suitably determined within a range of 12.5 to 45 degree. The notch portion 122 is formed at a rear side of the material dropping tube 123 and the exhaust port 119 is provided at a front side of the material dropping tube 123.
Therefore, without influencing the notch portion 122, the undesirable gas is discharged through mainly the exhaust pass 125 of the front side, and it can be obtained same effect as Embodiment 3. Furthermore, by providing the notch portion 122, the material dropping tube 123 has a wide area in the rear lower direction, and it can be capable of smoothly feeding the resin to the heating cylinder 103.

### Embodiment 5

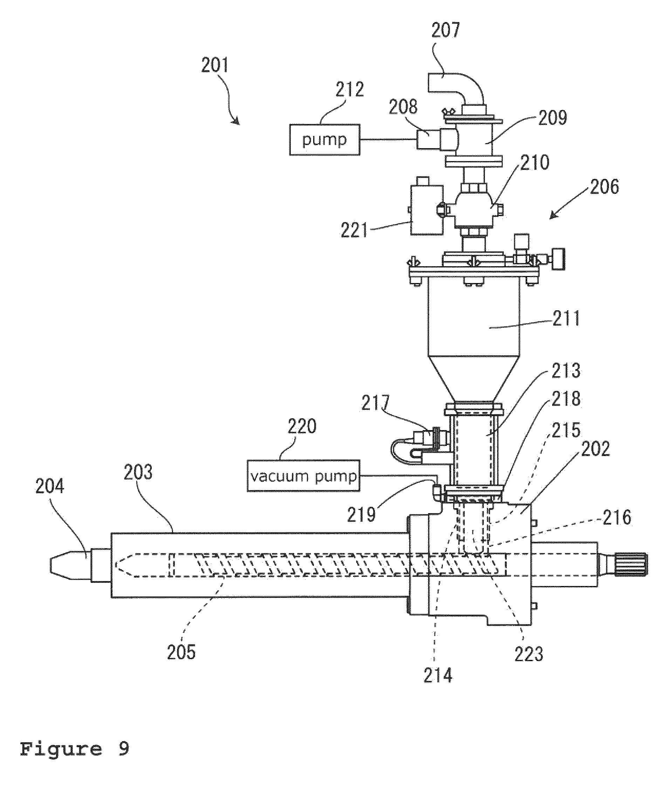

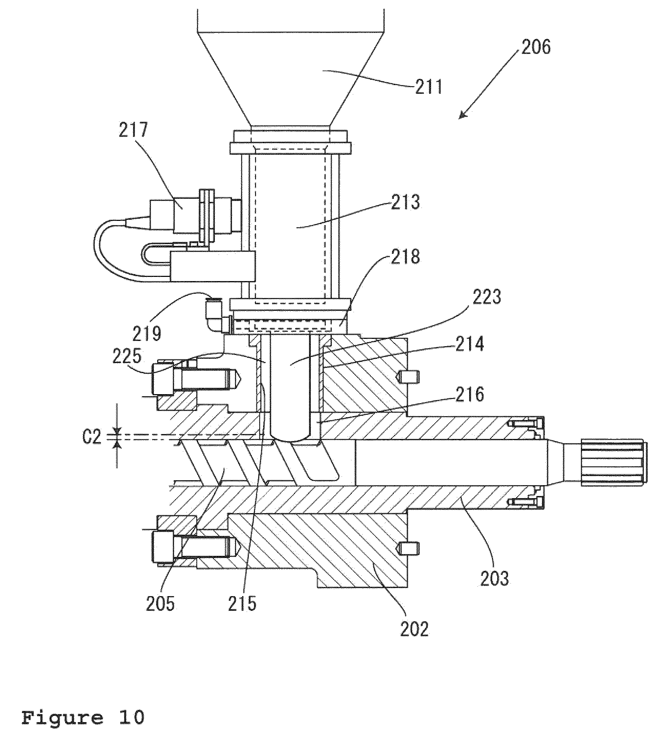

An injection unit 201 equipped in an injection molding machine of Embodiment 5 as shown in Figs. 9 and 10 comprises a tubular heating cylinder 203 fixed on a hopper block 202, an injection nozzle 204 mounted on a leading end of the heating cylinder 203, a screw 205 rotatably disposed in the inside of the heating cylinder 203, and a resin material feeding apparatus 206 for feeding the resin material such as thermoplastic resin to be a raw material of produced molding parts to the heating cylinder 203. According to Embodiment 5, an average dimension of the resin material fed from the resin material feeding apparatus 206 to the heating cylinder 203 is, as shown in Fig. 6, a length L is 2.96mm, a height H is 3.26mm and a width W is 2.47mm.

In the resin material feeding apparatus 206, in order from top to bottom, there are disposed a piping 207 for carrying the resin material, an injecting hopper 209 provided with an air suction port 208 at side, an openable and closable sealing valve 210, a feeding hopper 211, a glass tube 213, and a material dropping tube 223. The air suction port 208 of the injecting hopper 209 is connected with a pump 212.

The glass tube 213 provided at a lower part of the feeding hopper 211 is disposed in such a manner as to face a cylindrical sleeve 215 engaged with a periphery portion of a hole 214 formed on the hopper block 202. The material dropping tube 223 disposed at a lower part of the glass tube 223 is inserted into a hole portion 216 formed on an upper part of the heating cylinder 203. The resin material injected from the piping 207 to the injecting hopper 209 is fed from the injecting hopper 209 to the heating cylinder 203 through the openable and closable sealing valve 210, the feeding hopper 211, the glass tube 213, and the material dropping tube 223. The glass tube 213 of a lower part of the feeding hopper 211 is made of glass for avoiding unfavorable influence of static electricity.

The side of the glass tube 213 is provided with a proximity switch 217 as a sensor. The proximity switch 217 detects whether the predetermined amount of resin material exists in the glass tube 213. Accordingly, it can be detected whether the predetermined amount of resin material exists in the feeding hopper 211.

An upper part of the hopper block 202 is provided with a flange portion 218 holding the glass tube 213 integrally provided with the feeding hopper 211. An exhaust port 119 communicated with the glass tube 213 is formed on the flange portion 218. By driving a vacuum pump 220 connected to the exhaust port 219 in a state of the sealing valve 210 closed, a vacuum state is made in the glass tube 213, the feeding hopper 211 communicated with the glass tube 213, and the material dropping tube 223. On the other hand, when the vacuum state is released, an atmosphere release valve 221 disposed at a side of the sealing valve 110 is opened and an air flows from the atmosphere release valve 221 into the feeding hopper 211, the glass tube 213, the material dropping tube 223 and the heating cylinder 203.

The material dropping tube 223 disposed in a manner as to be inserted into a hole portion 216 of the heating cylinder 203 is provided directly above the screw 205. At an outer periphery of the material dropping tube 223, the tubular sleeve 215 is disposed with intervals having a double structure.

As shown in Figs. 10 to 13, a slight gap is formed over a predetermined range (location of 94.23 degree from a center of the screw 205) between a lower end portion of an inverted U-shaped material dropping tube 223 and the screw 205. According to Embodiment 5, the gap dimension C2 is determined not less than 1mm and not more than 3mm, more specifically 1mm. When the undesirable gas generated by melting the resin material in the heating cylinder 203 is discharged to the outside of the apparatus from the exhaust port 219 connected to the vacuum pump 220 through the exhaust path 225 located between the material dropping tube 223 and the tubular sleeve 215, the gap dimension C2 between the lower end portion of the material dropping tube 223 and the upper end portion of the screw 205 is smaller than the smallest dimension among a length L, height H and width W of the resin material fed into the heating cylinder 203. Therefore, it can be avoided that the resin material is carried to the exhaust path 225 located between the tubular sleeve 215 and the material dropping tube 223.

A description will be made about an operation for discharging the undesirable gas generated by feeding and melting the resin material in the heating cylinder 203. When the vacuum pump 220 is driven in a state of the sealing valve 210 closed, and vacuum state is made in the feeding hopper 211, the glass tube 213 communicated with the feeding hopper 211, and the material dropping tube 223, if the proximity switch 217 detects a state that the resin material does not exist in the glass tube 213, the atmosphere release valve 221 is opened, the sealing valve 210 is also opened, and an air flows from the outside into the injecting hopper 209, the feeding hopper 211, the glass tube 213 communicated with the same, the material dropping tube 223 and the heating cylinder 203 through the release valve 221 and the sealing valve 210.

When the pump 212 is driven, the air in the injecting hopper 209 is discharged from the air suction port 208 to the outside, and the resin material is carried from the outside to the heating cylinder 203 through the piping 207, the injecting hopper 209, the sealing valve 210, the feeding hopper 211, the glass tube 213 and the material dropping tube 223.

If the proximity switch 217 detects existence of the predetermined amount of resin material in the glass tube 213, the release valve 221 and the sealing valve 210 are closed, and the vacuum pump 220 is driven and a vacuum state is made in the feeding hopper 211, the glass tube 213, the material dropping tube 223 and the heating cylinder 203 communicated therewith.

When the vacuum state is made in the feeding hopper 211, the glass tube 213, the material dropping tube 223 and the heating cylinder 203 communicated therewith, and the resin material in the material dropping tube 223 is fed into the heating cylinder 203 during heating from its lower end portion by rotation of the screw 205, the resin material is carried to an injection nozzle 204 of the leading end portion of the screw by rotation of the screw 205 and metering process is carried out. At the same time of the metering process, the undesirable gas generated by melting the resin material in the heating cylinder 203 is discharged from the exhaust port 219 to the outside through the exhaust path 225 by applying evacuation of the vacuum pump 220. After the metering process, the injection nozzle 204 injects and fills molten resin material into a cavity of a clamped mold, and the molding parts are formed.

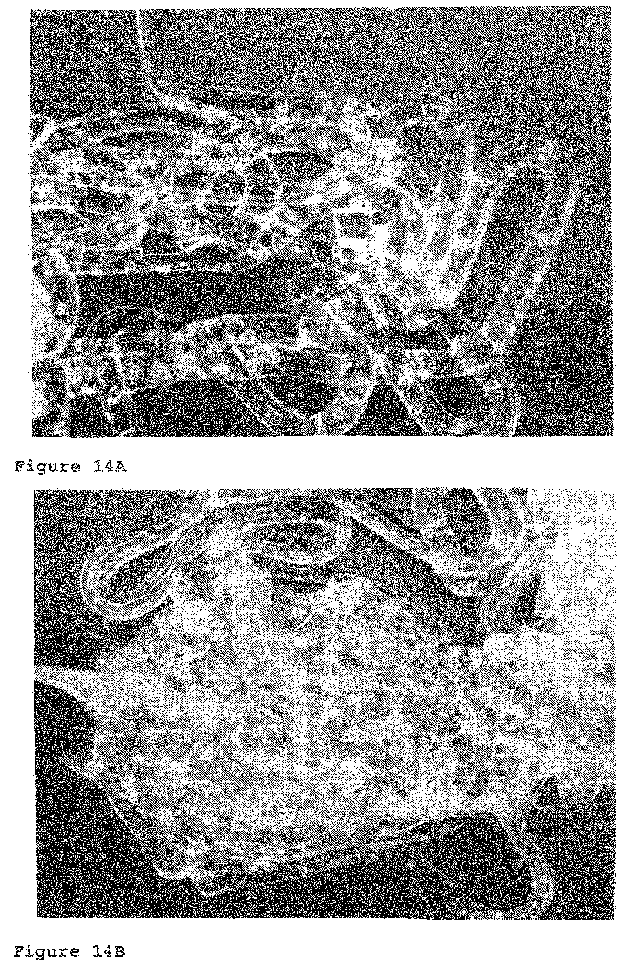

Herein, in Figs. 14A and 14B, a description will be made about each of experimental results when PMMA resin is adopted as resin material. As shown in the above example of operation, Fig. 14A shows a state of the resin material injected from the injection nozzle 204 when the undesirable gas generated by melting the resin material in the heating cylinder 203. As shown in the above example of operation, Fig. 14B shows a state of the resin material injected from the injection nozzle 204 when the lower end portion of the material dropping tube 223 is not formed as an inverted U-shaped, and a known material dropping tube formed in a plane is adopted.

In Fig. 14B, as apparent from a photo in Fig. 14B, many bubbles (so-called silver) are included in the resin material. On the contrary, in Fig. 14A, as apparent from a photo in Fig. 14A, bubbles (so-called silver) included in the resin material is small. Accordingly, Fig. 14A is more preferable than Fig. 14B in an amount of the bubbles (so-called silver) included in the resin material. As apparent from such experimental result, when the lower end portion of the material dropping tube 223 is formed as an inverted U-shaped, and the gap dimension between the lower end portion of the material dropping tube 223 and the screw 205 is determined as not less than 1mm and not more than 3mm, the defective ratio of the produced molding parts becomes lower and the undesirable gas can be effectively removed to the outside.

According to the injection molding machine of Embodiment 5 as mentioned above, the gap dimension C2 between the inverted U-shaped lower end portion of the material dropping tube 223 and the screw 205 is determined not less than 1mm and not more than 3mm. By applying evacuation of the vacuum pump 220, the undesirable gas generated at melting the resin material in the heating cylinder 203 is smoothly guided to the exhaust path 225 located between the tubular sleeve 215 and the material dropping tube 223, and is smoothly discharged to the outside from the exhaust port 219 through the exhaust path 225. The defective gas generated at melting the resin material in the heating cylinder 203 can be effectively discharged to the outside, and there can be suppressed mixture of the bubble into the produced molding parts, and reduced the defective ratio of the produced molding parts.

Additionally, the gap dimension C2 between the inverted U-shaped lower end portion of the material dropping tube 123 and the screw 205 is smaller than the smallest dimension among a length L, height H and width W of the resin material fed into the heating cylinder 203. Therefore, it can be avoided that the resin material is carried to the exhaust path 225 located between the material dropping tube 223 and the tubular sleeve 215 disposed at an outer periphery side of the material dropping tube 223 and. The undesirable gas flow passing through the exhaust path 225 is not disturbed thereby. It becomes possible to discharge more smoothly the undesirable gas from the exhaust port 219 to the outside, and it can be achieved to reduce the defective ratio of the produced molding parts.

### Embodiment 6

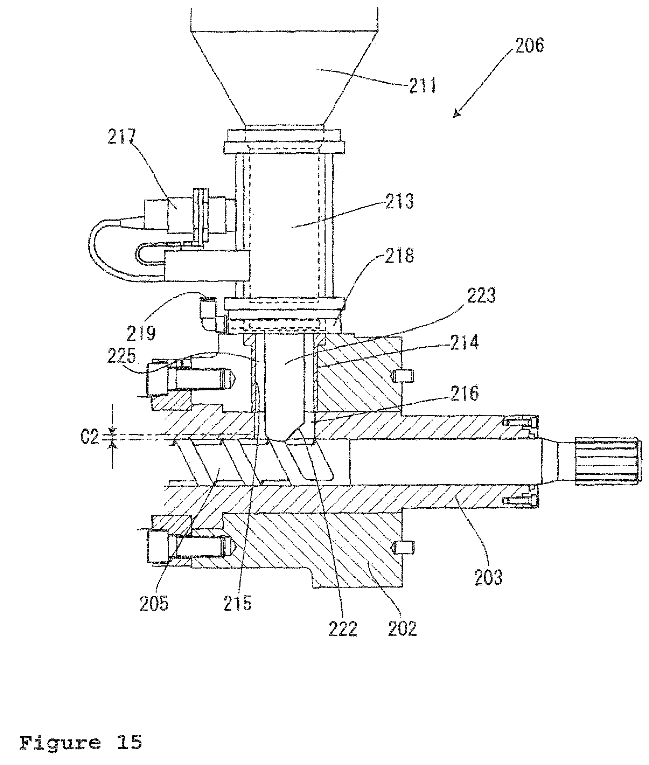

Fig. 15 shows a main part of the injection unit equipped in the injection molding machine according to Embodiment 6. Since Embodiment 6 has almost similar structure as that of the injection molding machine according to Embodiment 5, the same reference numerals are used for the same parts as in Embodiment 5, detailed description will be omitted, and mainly difference therebetween will be described.

In Embodiment 6, as shown in Fig. 15, an inclined notch portion 222 is formed at a rear part of the material dropping tube 223 disposed in a manner as to be inserted into a hole portion 216 of the heating cylinder 203. The notch portion 122 of the material dropping tube 223 is formed as inclined, and if the leading end portion of the screw 205 is defined as a front side and an opposite side is defined as a rear side, the notch portion 222 is formed as inclined upward obliquely at a rear side from both sides located at an intermediate position of the front and rear side of the lower end of the material dropping tube 223. In the present Embodiment 6, an angle of inclination of the notch portion 222 is described as 40 degree upward obliquely if a horizontal direction is defined as 0 degree, however, it may be suitably determined within a range of 12.5 to 45 degree. The notch portion 222 is formed at a rear side of the material dropping tube 223 and the exhaust port 219 is provided at a front side of the material dropping tube 223. Therefore, without influencing the notch portion 222, the undesirable gas is discharged through mainly the exhaust pass 225 of the front side, and it can be obtained same effect as Embodiment 5. Furthermore, by providing the notch portion 222, the material dropping tube 223 has a wide area in the rear lower direction, and it can be capable of smoothly feeding the resin to the heating cylinder 203.

### DESCRIPTION OF SYMBOLS

- 1: injection unit
- 2: hopper block
- 3: heating cylinder
- 4: injection nozzle
- 5: screw
- 6: resin material feeding apparatus
- 7: piping
- 8: air suction port
- 9: injecting hopper
- 10: sealing valve
- 11: feeding the hopper
- 12: pump
- 13: glass tube
- 14: hole
- 15: sleeve
- 16: hole portion
- 17: proximity switch
- 18: flange portion
- 19: suction port
- 20: vacuum pump
- 21: atmosphere release valve
- 22: notch portion
- 23: material dropping opening
- 24: nitrogen inflow port
- 101: injection unit
- 102: hopper block
- 103: heating cylinder
- 104: injection nozzle
- 105: screw
- 106: resin material feeding apparatus
- 107: piping
- 108: air suction port
- 109: injecting hopper
- 110: sealing valve
- 111: feeding the hopper
- 112: pump
- 113: glass tube
- 114: hole
- 115: tubular sleeve
- 116: hole portion
- 117: proximity switch
- 118: flange portion
- 119: discharge opening
- 120: vacuum pump
- 121: atmosphere release valve
- 122: notch portion
- 123: material dropping tube
- 125: exhaust path
- C1: gap dimension
- 201: injection unit
- 202: hopper block
- 203: heating cylinder
- 204: injection nozzle
- 205: screw
- 206: resin material feeding apparatus
- 207: piping
- 208: air suction port
- 209: injecting hopper
- 210: sealing valve
- 211: feeding the hopper
- 212: pump
- 213: glass tube
- 214: hole
- 215: tubular sleeve
- 216: hole portion
- 217: proximity switch
- 218: flange portion
- 219: discharge opening
- 220: vacuum pump
- 221: release valve
- 222: notch portion
- 223: material dropping tube
- 225: exhaust path
- C2: gap dimension
- H: height
- L: length
- W: width

## Claims

1. A method for removing an undesirable gas in an injection molding machine, said injection molding machine comprising:
a heating cylinder for melting a resin material, a resin material feeding apparatus for feeding said resin material to said heating cylinder, an injection nozzle mounted on a leading end of said heating cylinder and for injecting said resin material molten by said heating cylinder to a cavity of a mold, and a screw mounted in said heating cylinder and for sending said molten resin material to said injection nozzle; wherein
said resin material feeding apparatus comprises a pump for generating suction force by drive, an injecting hopper to which the resin material is injected by using suction power generated by driving said pump, an openable and closable sealing valve mounted at a lower part of said injecting hopper, a feeding hopper to which said resin material injected to said injecting hopper through said sealing valve is fed, a proximity switch for detecting whether a predetermined amount of said resin material fed to said feeding hopper exists or not, and a vacuum pump for evacuating an inside of said feeding hopper,
in order from top to bottom, there are disposed said injecting hopper, said open-close valve, said feeding hopper and said heating cylinder, and
said resin material is fed to said heating cylinder in a vacuum state of said feeding hopper and said heating cylinder communicated with said feeding hopper by driving said vacuum pump and it is suppressed to feed a undesirable gas into said heating cylinder.

2. A method for removing an undesirable gas in an injection molding machine according to claim 1, wherein a glass tube is disposed at a lower part of said feeding hopper, and said glass tube is provided with said proximity switch.

3. A method for removing an undesirable gas in an injection molding machine according to claim 2, wherein a material dropping opening is disposed at a lower part of said glass tube, an inclined notch is formed at a rear part of said material dropping opening, and said resin material fed to said heating cylinder from said material dropping opening through said feeding hopper and said glass tube is smoothly fed.

4. An injection molding machine comprising:
a heating cylinder for melting a resin material, a resin material feeding apparatus for feeding said resin material to said heating cylinder, an injection nozzle mounted at a leading end of said heating cylinder and for injecting said resin material molten by said heating cylinder into a cavity of a mold, a screw mounted in said heating cylinder and for sending the molten resin material to said injection nozzle; wherein
said resin material feeding apparatus comprises a pump for generating suction force by drive, a injecting hopper to which the resin material is injected by using suction power generated by driving said pump, an openable and closable sealing valve mounted at a lower part of said injecting hopper, a feeding hopper to which said resin material injected to said injecting hopper through said sealing valve is fed, a proximity switch for detecting whether a predetermined amount of said resin material fed to said feeding hopper exists or not, and a vacuum pump for evacuating said feeding hopper and said heating cylinder communicated with said feeding hopper by drive when there is detected a predetermined amount of said resin material fed to said feeding hopper by said proximity switch, a material dropping tube for feeding said resin material fed to said feeding hopper to said heating cylinder provided with said screw when said feeding hopper and said heating cylinder communicated with said feeding hopper are in a state of vacuum by driving said vacuum pump, a tubular sleeve for covering an outer periphery of said material dropping tube with an interval, and an exhaust port connected to said vacuum pump and for discharging an undesirable gas generated by melting said resin material in said heating cylinder to the outside through an exhaust path located between said tubular sleeve and said material dropping tube, and
a gap dimension between a lower end portion of said material dropping tube and an upper end portion of said screw is determined as not less than 1mm and not more than 3mm.

5. An injection molding machine according to claim 4, wherein said gap dimension between the lower end portion of said material dropping tube and the upper end portion of said screw is smaller than the smallest dimension among a length, height and width of said resin material fed into said heating cylinder.

6. An injection molding machine comprising:
a heating cylinder for melting resin material, a resin material feeding apparatus for feeding said resin material to said heating cylinder, an injection nozzle mounted at a leading end of said heating cylinder and for injecting said resin material molten by said heating cylinder into a cavity of a mold, a screw mounted in said heating cylinder and for sending the molten resin material to said injection nozzle; wherein
said resin material feeding apparatus comprises a pump for generating suction force by drive, an injecting hopper to which the resin material is injected by using suction power generated by driving said pump, an openable and closable sealing valve mounted at a lower part of said injecting hopper, a feeding hopper to which said resin material injected to said injecting hopper through said sealing valve is fed, a proximity switch for detecting whether a predetermined amount of said resin material fed to said feeding hopper exists or not, and a vacuum pump for evacuating said feeding hopper and said heating cylinder communicated with said feeding hopper by drive when there is detected a predetermined amount of said resin material fed to said feeding hopper by said proximity switch, a material dropping tube for feeding said resin material fed to said feeding hopper to said heating cylinder provided with said screw when said feeding hopper and said heating cylinder communicated with said feeding hopper is in a state of vacuum by driving said vacuum pump, a tubular sleeve for covering an outer periphery of said material dropping tube with an interval, and exhaust port connected to said vacuum pump and for discharging an undesirable gas generated by melting said resin material in said heating cylinder to the outside through an exhaust path located between said tubular sleeve and said material dropping tube, and
a lower end portion of said material dropping tube is formed as an inverted U-shaped,
a gap dimension between the lower end portion of said inverted U-shaped material dropping tube and the upper end portion of said screw is determined as not less than 1mm and not more than 3mm.

7. An injection molding machine according to claim 6, wherein said gap dimension between the lower end portion of said inverted U-shaped material dropping tube and the upper end portion of said screw is smaller than the smallest dimension among a length, height and width of said resin material fed into said heating cylinder.

8. An injection molding machine according to claims 6 or 7, wherein an inclined notch portion is formed at a rear lower part of said material dropping tube, and said resin material can be smoothly fed to said heating cylinder from said material dropping tube.
